# EUROPÄISCHE PATENTANMELDUNG

(11) **EP 4 335 794 A1**
(43) Veröffentlichungstag der Anmeldung: **13.03.2024**
(21) Anmeldenummer: 23194999.1
(22) Anmeldetag: 04.09.2023
(51) Int. Cl.: B65G 47/84

(54) **VORRICHTUNG ZUM FOLGEN EINER BETÄTIGUNGSKURVE**

(30) Priorität: 06.09.2022 DE 102022122525
(71) Anmelder: KRONES AG, 93073 Neutraubling (DE)
(72) Erfinder: SCHOENFELDER, Markus, 93073 Neutraubling (DE)
(74) Vertreter: v. Bezold & Partner Patentanwälte - PartG mbB

(57) **Zusammenfassung**

Die Erfindung betrifft u.a. eine Vorrichtung (18) zum Folgen einer Betätigungskurve (12) zum Betätigen einer Komponente. Die Vorrichtung (18) weist einen Trägerkörper (20) zum Verbinden mit der Komponente auf. Die Vorrichtung (18) weist eine erste Laufrolle (28) auf, die mit dem Trägerkörper (20) zum Folgen einer ersten Kurvenbahn (14) der Betätigungskurve (12) drehbar verbunden ist. Die Vorrichtung (18) weist eine zweite Laufrolle (30) auf, die mit dem Trägerkörper (20) zum Folgen einer zweiten, der ersten Kurvenbahn (14) gegenüberliegenden Kurvenbahn (16) der Betätigungskurve (12) drehbar verbunden und unabhängig von der ersten Laufrolle (28) drehbar ist. Vorteilhaft kann die Vorrichtung (18) einen besonders verschleißarmen Betrieb ermöglichen.

## Beschreibung

### Technisches Gebiet

Die Erfindung betrifft eine Vorrichtung zum Folgen einer Betätigungskurve und eine Einrichtung mit einer Betätigungskurve und mindestens einer Vorrichtung zum Folgen der Betätigungskurve.

### Technischer Hintergrund

Aus Behälterbehandlungsanlagen ist es bekannt, dass Verschließelemente eines Schraubverschlie-ßers mittels Laufrollen, die in einer Nutbahn laufen, betätigt werden. Die Laufrollen laufen mit Spiel in der Nutbahn. Durch dieses Spiel entstehen Stöße, wenn die Laufrollen einen Anlagewechsel in der Nutbahn machen. Diese Anlagenwechsel können durch den Verschließprozess an sich oder durch Prozess- und fertigungsbezogene Beschleunigungen ausgelöst werden. Durch die Stöße mit dem einhergehenden Laufrichtungswechsel der Laufrolle kann es zu einer erhöhten Belastung der Nutbahn kommen. Um dem Verschleiß entgegenzuwirken, könnten bspw. hochqualitative Nutbahn mit entsprechenden Härtungen und Laufrollen eingesetzt werden.

Die EP 3 031 738 A1 betrifft eine Vorrichtung zum Ausführen einer Hubbewegung zur Behälterbehandlung in einer Behälterbehandlungsanlage, umfassend eine Hubrolle und eine Hubkurve, welche zwei sich gegenüberliegende Kurvenbahnen zum Führen der Hubrolle aufweist. Die Hubrolle rollt jeweils auf einer der beiden Kurvenbahnen ab, wobei die Hubrolle in zumindest einem Abschnitt der Hubkurve gegen eine der Kurvenbahnen magnetisch vorgespannt ist.

Die DE 38 04 409 A1 offenbart eine Zentriertulpenanordnung an Füllmaschinen für Gefäße wie Flaschen, Dosen und dgl., bestehend aus einer an vertikalen Führungsstangen gehaltenen Zentriertulpe und einer die Höhenbewegung steuernden Kurvenrolle. Die Führungsstangen sind in voneinander getrennten Abschnitten unterteilt und weisen ein gemeinsames Kupplungsstück auf, in welchem mindestens ein Führungsstangen-Abschnitt unter elastischer Vorspannung innerhalb eines bestimmten Hubweges verschiebbar gelagert ist.

Der Erfindung liegt die Aufgabe zu Grunde, eine verbesserte Technik zum Folgen einer Betätigungskurve zu entwickeln, die bevorzugt besonders verschleißarm ist.

### Zusammenfassung der Erfindung

Die Aufgabe wird gelöst durch die Merkmale des unabhängigen Anspruchs 1. Vorteilhafte Weiterbildungen sind in den abhängigen Ansprüchen und der Beschreibung angegeben.

Ein Aspekt der vorliegenden Offenbarung betrifft eine Vorrichtung zum Folgen einer Betätigungskurve zum Betätigen einer Komponente (z. B. für eine Behälterbehandlungseinrichtung). Die Vorrichtung weist einen (z. B. plattenförmigen oder blockförmigen) Trägerkörper zum Verbinden mit der Komponente (z. B. über ein Gestänge, wie ein Hubgestänge) auf. Die Vorrichtung weist eine erste Laufrolle, die mit dem Trägerkörper zum Folgen einer ersten Kurvenbahn der Betätigungskurve drehbar verbunden ist, auf. Die Vorrichtung weist eine zweite Laufrolle, die mit dem Trägerkörper zum Folgen einer zweiten, der ersten Kurvenbahn gegenüberliegenden Kurvenbahn der Betätigungskurve drehbar verbunden und unabhängig von der ersten Laufrolle drehbar ist, auf.

Vorteilhaft ermöglichen die beiden unabhängig voneinander drehbaren Laufrollen, dass Anlagenwechsel mit einhergehenden Laufrichtungswechseln der Laufrollen und Stöße verhindert werden können. Bevorzugt kann die erste Laufrolle als Hauptlaufrolle ausgeführt ein, um die Prozess- bzw. Betätigungskräfte, z. B. die Verschließkräfte, zu übertragen. Die zweite Laufrolle kann wiederum über die Anlage an der zweiten Kurvenbahn und die Verbindung zu der ersten Laufrolle über den Trägerkörper dafür sorgen, dass sich die erste Laufrolle nicht innerhalb des Spiels in der Betätigungskurve bewegt, sondern dauerhaft in Kontakt mit der ersten Kurvenbahn bleibt. Beispielsweise kann die zweite Laufrolle als eine Art Vorspannrolle dienen, die die erste Laufrolle zur Anlage an der ersten Kurvenbahn vorspannt. Somit vollführen bevorzugt weder die erste Laufrolle noch die zweite Laufrolle Anlagenwechsel und Laufrichtungswechsel, wodurch ein Verschleiß erheblich verringert werden kann. Sowohl die Betätigungskurve als auch die Laufrollen können somit geschont werden.

In einem Ausführungsbeispiel spannt die zweite Laufrolle die erste Laufrolle, vorzugsweise elastisch, in Richtung zu der ersten Kurvenbahn vor, und/oder die zweite Laufrolle ist elastisch in Richtung zu der zweiten Kurvenbahn vorgespannt. Vorteilhaft kann damit dauerhaft und zuverlässig gewährleistet werden, dass die erste Laufrolle nur an der ersten Kurvenbahn abrollt.

In einem weiteren Ausführungsbeispiel sind die erste Laufrolle und die zweite Laufrolle axial voneinander beabstandet, und/oder die zweite Laufrolle ist exzentrisch zu der ersten Laufrolle angeordnet. Vorteilhaft kann mit dieser Anordnung zuverlässig sichergestellt werden, dass die beiden Laufrollen unabhängig voneinander drehbar sind, die erste Laufrolle nur an der ersten Kurvenbahn läuft und die zweite Laufrolle nur an der zweiten Kurvenbahn läuft.

In einem weiteren Ausführungsbeispiel ist die erste Laufrolle um eine erste Drehachse drehbar, die zweite Laufrolle ist um eine zweite Drehachse drehbar, und die erste Drehachse und die zweite Drehachse verlaufen parallel beabstandet zueinander. Vorteilhaft kann mit dieser Anordnung erreicht werden, dass die erste Laufrolle nur an der ersten Kurvenbahn läuft und die zweite Laufrolle nur an der zweiten Kurvenbahn läuft.

In einem weiteren Ausführungsbeispiel weist die zweite Laufrolle einen geringeren Laufrollendurchmesser auf als die erste Laufrolle. Vorteilhaft kann damit die jeweilige Aufgabe der Laufrollen in einer jeweils angepassten Konstruktion der Laufrollen umgesetzt werden, nämlich die erste Laufrolle als die Hauptlaufrolle und die zweite Laufrolle lediglich als Hilfslaufrolle bzw. Vorspannlaufrolle.

In einer Ausführungsform weist die Vorrichtung ferner ein Spannelement, vorzugsweise eine Feder, zum Vorspannen der ersten Laufrolle zu der ersten Kurvenbahn auf. Vorteilhaft kann damit ein einfaches Vorspannsystem zum Vorspannen der ersten Laufrolle gegen die erste Kurvenbahn realisiert werden, welches bspw. die Materialflexibiliät eines (z. B. metallischen) Werkstoffs des Spannelements nutzt, um dauerhaft flexibel die entsprechende Vorspannkraft zu übertragen.

In einer weiteren Ausführungsform ist das Spannelement in einer Wirkverbindung zwischen der ersten Laufrolle und der zweiten Laufrolle angeordnet. Alternativ oder zusätzlich spannt das Spannelement die erste Laufrolle und die zweite Laufrolle in einander entgegengesetzte Richtungen vor. Alternativ oder zusätzlich stützt das Spannelement die erste Laufrolle und die zweite Laufrolle elastisch gegeneinander ab.

In einer Ausführungsvariante ist das Spannelement als ein Stab (z. B. Vollstab oder Hohlstab), vorzugsweise Federstab, ausgeführt.

In einer weiteren Ausführungsvariante ist der Stab einseitig an oder in dem Trägerkörper eingespannt. Alternativ oder zusätzlich verbindet der Stab die zweite Laufrolle mit dem Trägerkörper. Alternativ oder zusätzlich ist der Stab drehfest mit dem Trägerkörper verbunden. Alternativ oder zusätzlich erstreckt sich der Stab durch die erste Laufrolle hindurch. Alternativ oder zusätzlich ist die erste Laufrolle im Wesentlichen koaxial zu dem Stab angeordnet. Alternativ oder zusätzlich weist der Stab eine Materialelastizität auf, mit der die zweite Laufrolle die erste Laufrolle elastisch in Richtung zu der ersten Kurvenbahn vorspannt. Alternativ oder zusätzlich ist eine Drehachse der zweiten Laufrolle parallel beabstandet zu einer Mittellängsachse des Stabs. Alternativ oder zusätzlich ist eine Drehachse der ersten Laufrolle koaxial zu einer Mittellängsachse des Stabs.

In einer Ausführungsform ist das Spannelement als eine Feder, vorzugsweise Schraubenfeder, besonders bevorzugt Schraubendruckfeder, ausgeführt. Vorzugsweise kann die Feder senkrecht zu einer Drehachse der zweiten Laufrolle angeordnet sein. Alternativ oder zusätzlich kann die Feder radial innen von der zweiten Laufrolle angeordnet sein. Alternativ oder zusätzlich kann die Feder einerseits an dem Trägerkörper (z. B. direkt oder mittelbar) abgestützt sein und andererseits an der zweiten Laufrolle (z. B. direkt oder mittelbar) abgestützt sein.

In einer weiteren Ausführungsform weist die Vorrichtung ferner eine Gleitlagerung auf, an der die zweite Laufrolle senkrecht zu einer Drehachse der zweiten Laufrolle verschiebbar gelagert ist.

Ein weiterer Aspekt der vorliegenden Offenbarung betrifft eine Einrichtung, vorzugsweise Behälterbehandlungseinrichtung, aufweisend eine Betätigungskurve, vorzugsweise eine Hubkurve, mit einer ersten, vorzugsweise oberen, Kurvenbahn und einer zweiten, vorzugsweise unteren, Kurvenbahn, die der ersten Kurvenbahn (z. B. direkt) gegenüberliegt. Die Einrichtung weist ferner mindestens eine zu betätigende Komponente, vorzugsweise Hubkomponente, auf. Die Einrichtung weist ferner mindestens eine Vorrichtung zum Folgen einer Betätigungskurve wie hierin offenbart auf. Jeweils die erste Laufrolle ist an der ersten Kurvenbahn geführt, die zweite Laufrolle ist an der zweiten Kurvenbahn geführt, und der Trägerkörper ist mit einer jeweiligen zu betätigenden Komponente (der mindestens einen Komponente) zum Übertragen eines Verlaufs (z. B. Höhenprofil oder Streckenprofil bzw. Streckenverlauf) der Betätigungskurve zu der jeweiligen zu betätigenden Komponente (z. B. zum Betätigen der jeweiligen zu betätigenden Komponente) verbunden. Vorteilhaft können mit der Einrichtung die gleichen Vorteile erzielt werden, die bereits unter Bezugnahme auf die Vorrichtung erläutert wurden.

In einem Ausführungsbeispiel ist die Einrichtung eine Verschließeinrichtung, vorzugsweise ein Verschließerkarussell. Alternativ oder zusätzlich ist die mindestens eine Komponente ein Verschließelement zum Verschließen eines Behälters mit einem Behälterverschluss.

In einem weiteren Ausführungsbeispiel sind die erste Laufrolle und die zweite Laufrolle derart zwischen der ersten Kurvenbahn und der zweiten Kurvenbahn verspannt, dass die erste Laufrolle die zweite Kurvenbahn nicht berührt und/oder die zweite Laufrolle die erste Kurvenbahn nicht berührt.

In einem weiteren Ausführungsbeispiel ist ein Abstand der ersten Laufrolle zur zweiten Kurvenbahn kleiner als ein Abstand der zweiten Laufrolle zur ersten Kurvenbahn.

In einer Ausführungsform ist eine Betätigungskraft zum Betätigen der mindestens einen zu betätigenden Komponente im Wesentlichen von der ersten Kurvenbahn übertragen von der jeweiligen ersten Laufrolle bewirkt. Alternativ oder zusätzlich spannt die zweite Laufrolle im Wesentlichen (bzw. als Hauptfunktion) die erste Laufrolle gegen die erste Kurvenbahn vor.

Es ist möglich, dass die Vorrichtung und/oder die Einrichtung in einer Behälterbehandlungsanlage zum Herstellen, Reinigen, Beschichten, Prüfen, Abfüllen, Verschließen, Etikettieren, Bedrucken und/oder Verpacken von Behältern für flüssige Medien, vorzugsweise Getränke oder flüssige Nahrungsmittel, umfasst ist.

Beispielsweise können die Behälter als Flaschen, Dosen, Kanister, Kartons, Flakons usw. ausgeführt sein.

Die zuvor beschriebenen bevorzugten Ausführungsformen und Merkmale der Erfindung sind beliebig miteinander kombinierbar.

### Kurzbeschreibung der Figuren

Weitere Einzelheiten und Vorteile der Erfindung werden im Folgenden unter Bezug auf die beigefügten Zeichnungen beschrieben. Es zeigen:
- Figur 1: eine Seitenansicht eines Abschnitts einer Vorrichtung zum Folgen einer Betätigungskurve zum Betätigen einer Komponente, z. B. für eine Behälterbehandlungseinrichtung, gemäß einem Ausführungsbeispiel der vorliegenden Offenbarung;
- Figur 2: eine Schnittansicht eines Abschnitts einer Behälterbehandlungseinrichtung mit der Vorrichtung zum Folgen einer Betätigungskurve von Figur 1;
- Figur 3: eine perspektivische Ansicht eines Abschnitts einer Vorrichtung zum Folgen einer Betätigungskurve zum Betätigen einer Komponente, z. B. für eine Behälterbehandlungseinrichtung, gemäß einem Ausführungsbeispiel der vorliegenden Offenbarung; und
- Figur 4: eine Schnittansicht eines Abschnitts einer Behälterbehandlungseinrichtung mit der Vorrichtung zum Folgen einer Betätigungskurve von Figur 3.

Die in den Figuren gezeigten Ausführungsformen stimmen zumindest teilweise überein, so dass ähnliche oder identische Teile mit den gleichen Bezugszeichen versehen sind und zu deren Erläuterung auch auf die Beschreibung der anderen Ausführungsformen bzw. Figuren verwiesen wird, um Wiederholungen zu vermeiden.

### Detaillierte Beschreibung beispielhafter Ausführungsformen

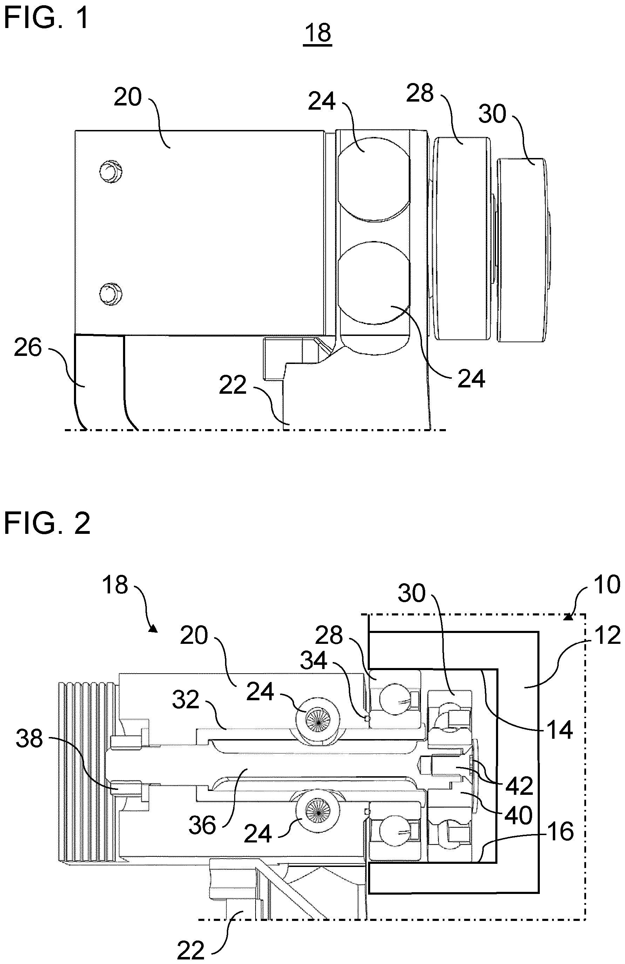

Die Figur 2 zeigt eine Vorrichtung 18 zum Folgen einer (mechanischen) Betätigungskurve 12 einer nur abschnittsweise dargestellten Behälterbehandlungseinrichtung 10. Die Figur 1 stellt lediglich die Vorrichtung 18 dar.

Die Behälterbehandlungseinrichtung 10 ist zum Behandeln eines Behälters ausgebildet. Besonders bevorzugt ist die Behälterbehandlungseinrichtung 10 eine Verschließeinrichtung zum Verschließen von Behältern mit einem Behälterverschluss ausgebildet. Prinzipiell können die hierin offenbarten Techniken jedoch auch bei anderen Einrichtungen, wie bspw. Behälterbehandlungseinrichtungen, angewendet werden, z. B. bei einer Fülleinrichtung zum Befüllen von Behältern mit einem bspw. flüssigen oder pastösen Füllgut.

Beispielsweise kann die Behälterbehandlungseinrichtung 10 als eine Rundläufer-Behälterbehandlungseinrichtung ausgeführt sein. Die Rundläufer-Behälterbehandlungseinrichtung kann die Betätigungskurve 12 aufweisen, die sich um einen Umfang der Behälterbehandlungseinrichtung 10 erstrecken kann. Die Rundläufer-Behälterbehandlungseinrichtung kann mehrere Behandlungsstationen aufweisen, die um einen Umfang der Behälterbehandlungseinrichtung 10 angeordnet sind. Jeder Behandlungsstation kann je eine Vorrichtung 18 zugeordnet sein. Bevorzugt kann die Behälterbehandlungseinrichtung 10 als ein Verschließerkarussell bzw. eine Rundläufer-Verschließeinrichtung ausgebildet sein.

Die Behälterbehandlungseinrichtung 10 kann eine zu betätigende Komponente (nicht in den Figuren dargestellt) aufweisen. Die zu betätigende Komponente kann einer Behandlungsstation der Behälterbehandlungseinrichtung 10 zugeordnet sein. Die zu betätigenden Komponente kann von der Betätigungskurve 12 über die Vorrichtung 18 betätigbar sein. Bevorzugt weist Behälterbehandlungseinrichtung 10 mehrere zu betätigende Komponenten und mehrere Vorrichtungen 18 auf, wobei besonders bevorzugt jede Vorrichtung 18 mit je einer der zu betätigenden Komponenten mechanisch verbunden ist. Die mechanische Verbindung zwischen der zu betätigenden Komponente und der Vorrichtung 18 kann beispielsweise eine Verbindungsstange oder ein Verbindungsgestänge aufweisen.

Bevorzugt kann die zu betätigende Komponente mittels der Betätigung bewegt werden. Die Bewegung kann bspw. linear bzw. translatorisch sein, z. B. in einer Vertikalrichtung oder in einer Horizontalrichtung. Bevorzugt kann die zu betätigende Komponente eine Hubkomponente sein. Die Hubkomponente kann bewirkt durch die Betätigungskurve 12 und übertragen durch die Vorrichtung 18 entlang eines Hubwegs bewegt werden. Alternativ oder zusätzlich kann die Bewegung bspw. eine Schwenkbewegung sein.

Bevorzugt kann die zu betätigende Komponente ein Verschließelement bzw. ein Verschließorgan zum Verschließen eines Behälters mit einem Behälterverschluss sein. Der Behälterverschluss kann bevorzugt mittels eine Hubbewegung des Verschließelements auf eine Behältermündung des Behälters aufgebracht werden.

Alternativ kann die Komponente bspw. eine Hubplatte zum bodenseitigen Abstützen eines Behälters oder ein entlang eines Hubwegs bewegbares Teil eines Füllorgans zum Füllen eines Behälters sein, z. B. eine Zentrierglocken, ein Füllventil, ein Spülrohr oder eine Kurzschlusssonde.

Alternativ kann die Komponente bspw. eine Behälterhalterung, z. B. eine Behälterklammer, sein. Die Behälterhalterung kann translatorisch und/oder schwenkbar sein.

Die Betätigungskurve 12 weist eine erste Kurvenbahn 14 und eine zweite Kurvenbahn 16 auf. Die erste Kurvenbahn 14 und die zweite Kurvenbahn 16 liegen einander gegenüber, vorzugsweise direkt. Die Kurvenbahnen 14 und 16 können parallel zueinander verlaufen. Bevorzugt ist die erste Kurvenbahn 14 eine obere Kurvenbahn, und die zweite Kurvenbahn 16 ist eine untere Kurvenbahn. Bevorzugt kann die Betätigungskurve 12 eine Hubkurve zum Bewirken einer Hubbewegung einer über die Vorrichtung 18 verbundenen Komponente sein. Es ist allerdings bspw. auch möglich, dass die erste Kurvenbahn 14 eine innere Kurvenbahn und die zweite Kurvenbahn 16 eine äußere Kurvenbahn ist, oder umgekehrt.

Die Betätigungskurve 12, die erste Kurvenbahn 14 und/oder zweite Kurvenbahn 16 kann umlaufend bzw. geschlossen sein. Eine Mittelachse der Betätigungskurve 12, der ersten Kurvenbahn 14 und/oder der zweiten Kurvenbahn 16 kann im Wesentlichen vertikal ausgerichtet sein. Die Kurvenbahnen 14 und 16 können über eine bevorzugt umlaufende Verbindungsfläche (z. B. Wandfläche oder Bodenfläche) miteinander verbunden sein. Die Kurvenbahnen 14, 16 können als Laufflächen für Laufrollen usw. dienen. Die Betätigungskurve 12 kann als eine umlaufende Nut ausgeführt sein. Die Betätigungskurve 14 kann ein U-Profil bzw. einen U-förmigen Querschnitt aufweisen, wobei ein Außenschenkel von der ersten Kurvenbahn 14 und der andere Außenschenkel von der zweite Kurvenbahn 16 gebildet ist.

Ein Verlauf der Kurvenbahnen 14 und 16 kann an eine gewünschte Betätigung der zu betätigenden Komponente angepasst sein. Der Verlauf kann sich auf einen Höhenverlauf bzw. ein Höhenprofil oder einen Streckenverlauf (z. B. Verlauf eines Radialabstands zu einer Mittelachse der Betätigungskurve 12) bzw. ein Streckenprofil der Kurvenbahnen 14 und 16 beziehen. Beispielsweise kann mittels des Höhenprofils eine Hubbewegung der zu betätigenden Komponente gesteuert werden.

Die Vorrichtung 18 weist einen Trägerkörper 20, eine erste Laufrolle 28 und eine zweite Laufrolle 30 auf. Die Vorrichtung 18 kann ferner ein Rohrelement 32, ein Vorspannring 34, ein Spannelement 36, ein Sicherungselement 38, einen Stützkörper 40 und/oder ein Sicherungselement 42 aufweisen.

Der Trägerkörper 20 kann mittels einer mechanischen Verbindungseinrichtung 22 mit der zu betätigenden Komponente verbunden sein. Die Verbindungseinrichtung 22 kann bspw. einen Zylinder (z. B. Hubzylinder), eine Verbindungsstange (z. B. Hubstange) oder ein Verbindungsgestänge (z. B. Hubgestänge) aufweisen. Es ist möglich, dass der Trägerkörper 20 die zu betätigende Komponente trägt und/oder die zu betätigende Komponente anderweitig abgestützt ist.

Die Verbindungseinrichtung 22 kann mittels mindestens eines Befestigungselements 24 an dem Trägerkörper 20 befestigt sein. Das mindestens eine Befestigungselement 24 kann sich durch ein jeweiliges Befestigungsloch, vorzugsweise Durchgangsloch, des Trägerkörpers 20 erstrecken.

Der Trägerkörper 20 kann seitlich neben der ersten Laufrolle 28, der zweiten Laufrolle 30 und/oder der Betätigungskurve 12 angeordnet sein. Bevorzugt ist der Trägerkörper 20 oberhalb von der zu betätigenden Komponente angeordnet. Der Trägerkörper 20 kann bspw. im Wesentlichen blockförmig sein.

Bevorzugt kann der Trägerkörper 20 über eine Drehmomentstütze 26 an der Verbindungseinrichtung 22 abgestützt sein. Dadurch kann bspw. ein Verdrehen des Trägerkörpers 20 verhindert werden. Beispielsweise kann die Drehmomentstütze 26 an einer den Laufrollen 28, 30 entgegengesetzten Seite des Trägerkörpers 20 mit dem Trägerkörper 20 verbunden sein. Beispielsweise kann die Drehmomentstütze 26 mittels einer Schraube- und/oder Klemmverbindung mit dem Trägerkörper 20 verbunden sein.

Die erste Laufrolle 28 ist drehbar mit dem Trägerkörper 20 verbunden. Beispielsweise kann die erste Laufrolle 28 auf dem Rohrelement 32 abgestützt sein, das mit dem Trägerkörper 20 verbunden ist. Es ist jedoch bspw. auch möglich, dass die erste Laufrolle 28 direkt auf dem Trägerkörper 20 abgestützt ist (nicht in den Figuren 1 und 2 dargestellt).

Die erste Laufrolle 28 ist zum Folgen der ersten Kurvenbahn 14 an der ersten Kurvenbahn 14 geführt. Die erste Laufrolle 28 kann an der ersten Kurvenbahn 14 abrollen. Die erste Laufrolle 28 kann beabstandet zu der zweiten Kurvenbahn 16 positioniert sein. Die erste Laufrolle 28 kann die zweite Kurvenbahn 16 nicht berühren. Die erste Laufrolle 28 kann in der Betätigungskurve 12 angeordnet sein.

Die erste Laufrolle 28 kann durch deren Abstützung an der ersten Kurvenbahn 14 im Wesentlichen für eine Übertragung der Prozesskräfte beim Betätigen der zu betätigenden Komponente sorgen. Die erste Laufrolle 28 kann daher auch als Hauptlaufrolle, Prozesskraftlaufrolle oder Betätigungslaufrolle bezeichnet werden.

Die zweite Laufrolle 30 ist drehbar mit dem Trägerkörper 20 verbunden. Beispielsweise kann die zweite Laufrolle 30 auf dem Stützköper 40 abgestützt sein, der über das Spannelement 36 mit dem Trägerkörper 20 verbunden sein kann. Es ist jedoch bspw. auch möglich, dass die zweite Laufrolle 30 direkt auf dem Trägerkörper 20 abgestützt ist (nicht in den Figuren 1 und 2 dargestellt).

Die zweite Laufrolle 30 ist zum Folgen der zweiten Kurvenbahn 16 an der zweiten Kurvenbahn 16 geführt. Die zweite Laufrolle 30 kann an der zweiten Kurvenbahn 16 abrollen. Die zweite Laufrolle 30 kann beabstandet zu der ersten Kurvenbahn 14 positioniert sein. Die erste Laufrolle 28 kann die zweite Kurvenbahn 16 nicht berühren. Die zweite Laufrolle 30 kann in der Betätigungskurve 12 angeordnet sein.

Die zweite Laufrolle 30 kann die erste Laufrolle 28, vorzugsweise elastisch, in Richtung zu der ersten Kurvenbahn 14 zur Anlage an der ersten Kurvenbahn 14 vorspannen. Die Vorspannung kann derart sein, dass die zweite Laufrolle 30 entlang eines Umlaufs der ersten Kurvenbahn 14 im Wesentlichen nie einen Kontakt zu der ersten Kurvenbahn 14 verliert. Die Vorspannung kann mittels des Spannelements 36 erfolgen, wie hierin noch im Detail beschrieben ist. Die zweite Laufrolle 30 kann somit auch als eine Vorspannlaufrolle bezeichnet werden.

Bevorzugt kann ein Abstand zwischen der ersten Laufrolle 28 und der zweiten Kurvenbahn 16 kleiner sein als ein Abstand zwischen der zweiten Laufrolle 30 und der ersten Kurvenbahn 14. Die zweite Laufrolle 30 kann einen geringen Laufrollendurchmesser aufweisen als die erste Laufrolle 28.

Beispielsweise kann die zweite Laufrolle 30 exzentrisch zu der ersten Laufrolle 28 angeordnet sein. Beispielsweise können eine Drehachse der ersten Laufrolle 28 und eine Drehachse der zweiten Laufrolle 30 parallel beabstandet voneinander sein. Die Drehachse der ersten Laufrolle 28 kann näher zu der ersten Kurvenbahn 14 positioniert sein als die Drehachse der zweiten Laufrolle 30. Die Drehachse der zweiten Laufrolle 30 kann näher zu der zweiten Kurvenbahn 16 positioniert sein als die Drehachse der ersten Laufrolle 28.

Die erste Laufrolle 28 und die zweite Laufrolle 30 können voneinander beabstandet sein bzw. einander nicht berühren. Bevorzugt sind die erste Laufrolle 28 und die zweite Laufrolle 30 axial voneinander beabstandet, z. B. bezüglich einer Mittelachse bzw. Drehachse der ersten Laufrolle 28 oder der zweiten Laufrolle 30 oder bezüglich einer Längsachse des Trägerkörpers 20.

Die erste Laufrolle 28 und die zweite Laufrolle 30 sind unabhängig voneinander drehbar. Bevorzugt kann eine Drehrichtung der ersten Laufrolle 28 beim Abrollen an der ersten Kurvenbahn 14 entgegengesetzt zu einer Drehrichtung der zweiten Laufrolle 30 beim Abrollen an der zweiten Kurvenbahn 16 sein. Aufgrund möglicher unterschiedlicher Laufrollendurchmesser können sich auch die Drehzahlen der ersten Laufrolle 28 und der zweiten Laufrolle 30 voneinander unterscheiden.

Das Rohrelement 32 kann in dem Trägerkörper 20 aufgenommen sein. Das Rohrelement 32 kann bspw. in einem bevorzugt zentralen Loch des Trägerkörpers 20 aufgenommen sein.

Das Rohrelement 32 kann in dem Trägerkörper 20 axial gesichert sein. Bevorzugt kann das Spannelement 36 das Rohrelement 32 axial im Trägerkörper 20 sichern. Beispielsweise kann das Rohrelement 32 zwischen einem bevorzugt umlaufenden Absatz oder einem bevorzugt umlaufenden Kragen des Spannelements 36 und einer (z. B. Innen-) Wand des Trägerkörpers 20 geklemmt sein. Bevorzugt kann eine Stirnwand des Rohrelements 32 zwischen dem Absatz oder Kragen des Spannelements 36 und der Wand des Trägerkörpers 20 geklemmt sein. Die Stirnwand des Rohrelements 32 ist bevorzugt entgegengesetzt zu einem freien Ende des Rohrelements 32.

Das Rohrelement 32 kann die erste Laufrolle 28 abstützen. Beispielsweise kann das Rohrelement 32 einen Abschnitt aufweisen, an bzw. auf dem die erste Laufrolle 28 abgestützt ist. Der Abschnitt kann an einem freien Ende des Rohrelements 32 angeordnet sein. Der Abschnitt kann außerhalb des Trägerkörpers 20 angeordnet sein.

Die erste Laufrolle 28 kann an dem Rohrelement 32 axial gesichert sein. Beispielsweise kann das Rohrelement 32 einen Absatz oder Kragen aufweisen. Eine Stirnseite der ersten Laufrolle 28 kann an dem Absatz oder Kragen zum axialen Sichern der ersten Laufrolle 28 anliegen. Eine entgegengesetzte Stirnseite der ersten Laufrolle 28 kann bspw. an einer Fläche, z. B. Stirnfläche, des Trägerkörpers 20 axial gesichert sein.

Der Vorspannring 34 kann die erste Laufrolle 28 axial vorspannen. Beispielsweise kann der Vorspannring 34 in einer umlaufenden Nut in einer Stirnfläche des Trägerkörpers 20 angeordnet sein. Der Vorspannring 34 kann die erste Laufrolle 28 axial gegen das Rohrelement 32 drücken, z. B. gegen einen Absatz oder Kragen an einem freien Ende des Rohrelements 32. Der Vorspannring 34 kann bevorzugt elastisch verformbar sein, um die erste Laufrolle 28 axial unter Vorspannung zu setzen.

Das Spannelement 36 kann in einer Wirkverbindung zwischen der ersten Laufrolle 28 und der zweiten Laufrolle 30 angeordnet sein. Das Spannelement 36 kann bevorzugt als eine Feder ausgeführt sein bzw. wirken. Das Spannelement 36 kann die erste Laufrolle 28 und die zweite Laufrolle 30 in einander entgegengesetzte Richtungen vorspannt. Das Spannelement 36 kann die zweite Laufrolle 30 elastisch in Richtung zu der zweiten Kurvenbahn 16 vorspannen und die erste Laufrolle 28 elastisch in Richtung zu der ersten Kurvenbahn 14 vorspannen.

Das Spannelement 36 kann die erste Laufrolle 28 und die zweite Laufrolle 30 derart zwischen der ersten Kurvenbahn 14 und der zweiten Kurvenbahn 16 verspannen, dass die erste Laufrolle 28 die erste Kurvenbahn 14 berührt und die zweite Kurvenbahn 16 nicht berührt und/oder dass die zweite Laufrolle 30 die zweite Kurvenbahn 16 berührt und die erste Kurvenbahn 14 nicht berührt.

Das Spannelement 36 kann als ein Stab ausgeführt sein. Der Stab ist bevorzugt ein Federstab. Der Stab kann bspw. ein Vollstab oder ein Hohlstab sein. Der Stab kann sich durch die erste Laufrolle 28 hindurcherstrecken. Die erste Laufrolle 28 kann im Wesentlichen koaxial zu dem Stab angeordnet sein. Das Rohrelement 32 kann koaxial zu dem Stab angeordnet sein. Eine Drehachse der zweiten Laufrolle 30 kann parallel beabstandet zu einer Mittellängsachse des Stabs sein.

Der Stab kann eine Materialelastizität aufweisen, mit der die zweite Laufrolle 30 die erste Laufrolle 28 elastisch in Richtung zu der ersten Kurvenbahn 14 vorspannt. Bspw. kann der Stab aus einem Federstahl hergestellt sein. Bspw. kann der Stab aus 1.4310 (X10CrNi18-8) oder 1.4057 (X17CrNi16-2) hergestellt sein.

Das Spannelement 36 kann drehfest mit dem Trägerkörper 20 verbunden sein. Das Spannelement 36 kann einseitig an oder in dem Trägerkörper 20 eingespannt sein. Bevorzugt kann sich das Spannelement 36 durch ein Loch im Trägerkörper 20 erstrecken.

Die zweite Laufrolle 30 kann mit einem Endabschnitt des Spannelements 36 verbunden sein. Bevorzugt kann die zweite Laufrolle 30 über das Stützelement 40 mit dem Endabschnitt des Spannelements 36 verbunden sein. Der Endabschnitt des Spannelements 36 kann sich aus dem Rohrelement 32 herauserstrecken.

Das Spannelement 36 kann mittels des Sicherungselements 38 axial gesichert sein. Mittels des Sicherungselements 38 kann damit auch das Rohrelement 32 axial gesichert sein. Beispielsweise kann das Sicherungselement 38 auf ein Ende des Spannelements 36 aufgeschraubt sein. Das Sicherungselement 38 kann beispielsweise als eine Mutter ausgeführt sein. Es ist möglich, dass das Sicherungselement 38 verdrehgesichert ist.

Der Stützkörper 40 kann radial innen von der zweiten Laufrolle 30 angeordnet sein. Der Stützkörper 40 kann die zweite Laufrolle 30 an dem Spannelement 36 abstützen. Der Stützkörper 40 kann über das Sicherungselement 42 an einem Ende des Spannelements 36 befestigt sein. Die zweite Laufrolle 30 kann über einen Außenkragen des Sicherungselements 42 axial auf dem Stützkörper 40 gesichert sein.

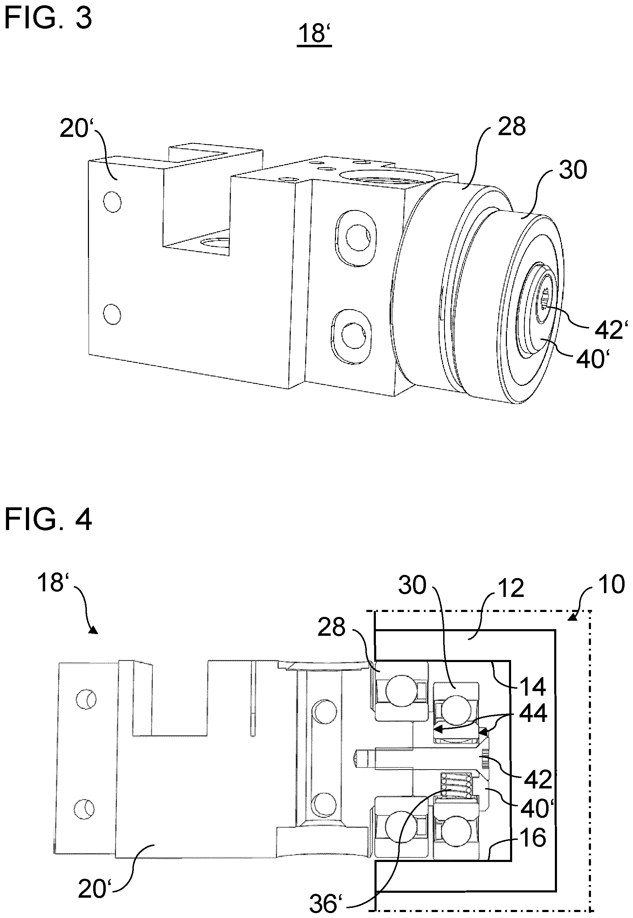

Die Figuren 3 und 4 zeigen ein modifiziertes Ausführungsbeispiel für die Vorrichtung 18' zum Folgen der Betätigungskurve 12.

Das Spannelement 36' kann als eine Schraubenfeder, besonders bevorzugt Schraubendruckfeder, ausgeführt sein. Das Spannelement 36' kann in dem Stützkörper 40' aufgenommen sein. Eine Mittellängsachse des Spannelements 36' kann senkrecht zu einer Drehachse der zweiten Laufrolle 30 angeordnet sein. Das Spannelement 36' kann radial innen von der zweiten Laufrolle 30 angeordnet sein. Das Spannelement 36' kann bspw. über den Stützkörper 40' einerseits an dem Trägerkörper 20' abgestützt sein. Andererseits kann das Spannelement 36' an der zweiten Laufrolle 30 abgestützt sein, z. B. direkt oder indirekt.

Der Stützkörper 40' kann eine Gleitlagerung bzw. einen Gleitsitz 44 für die zweite Laufrolle 30 aufweisen. Die Gleitlagerung 44 kann eine Verschiebung der zweiten Laufrolle 30 senkrecht zu der Drehachse der zweiten Laufrolle 30 ermöglichen, z. B. unter Wirkung des Spannelements 36'. Der Stützkörper 40' kann bspw. mittels des Sicherungselements 42' an dem Trägerkörper 20' gesichert sein, z. B. an einer Stirnseite des Trägerkörpers 20'. Es ist möglich, dass die Gleitlagerung 44 prinzipiell auch bei dem unter Bezugnahme auf die Figuren 1 und 2 erläuterten Ausführungsbeispiel umfasst sein könnte.

Die Erfindung ist nicht auf die vorstehend beschriebenen bevorzugten Ausführungsbeispiele beschränkt. Vielmehr ist eine Vielzahl von Varianten und Abwandlungen möglich, die ebenfalls von dem Erfindungsgedanken Gebrauch machen und deshalb in den Schutzbereich fallen. Insbesondere beansprucht die Erfindung auch Schutz für den Gegenstand und die Merkmale der Unteransprüche unabhängig von den in Bezug genommenen Ansprüchen. Insbesondere sind die einzelnen Merkmale des unabhängigen Anspruchs 1 jeweils unabhängig voneinander offenbart. Zusätzlich sind auch die Merkmale der Unteransprüche unabhängig von sämtlichen Merkmalen des unabhängigen Anspruchs 1 und beispielsweise unabhängig von den Merkmalen bezüglich des Vorhandenseins und/oder der Konfiguration des Trägerkörpers, der ersten Laufrolle und/oder der zweiten Laufrolle des unabhängigen Anspruchs 1 offenbart.

### Bezugszeichenliste

- 10: Behälterbehandlungseinrichtung
- 12: Betätigungskurve
- 14: erste Kurvenbahn
- 16: zweite Kurvenbahn
- 18: Vorrichtung zum Folgen einer Betätigungskurve
- 20: Trägerkörper
- 22: Verbindungseinrichtung
- 24: Befestigungselement
- 26: Drehmomentstütze
- 28: erste Laufrolle
- 30: zweite Laufrolle
- 32: Rohrelement
- 34: Vorspannring
- 36: Spannelement
- 38: Sicherungselement
- 40: Stützkörper
- 42: Sicherungselement
- 44: Gleitlagerung

## Patentansprüche

1. Vorrichtung (18) zum Folgen einer Betätigungskurve (12) zum Betätigen einer Komponente, aufweisend:
einen Trägerkörper (20) zum Verbinden mit der Komponente;
eine erste Laufrolle (28), die mit dem Trägerkörper (20) zum Folgen einer ersten Kurvenbahn (14) der Betätigungskurve (12) drehbar verbunden ist; und
eine zweite Laufrolle (30), die mit dem Trägerkörper (20) zum Folgen einer zweiten, der ersten Kurvenbahn (14) gegenüberliegenden Kurvenbahn (16) der Betätigungskurve (12) drehbar verbunden und unabhängig von der ersten Laufrolle (28) drehbar ist.

2. Vorrichtung (18) nach Anspruch 1, wobei:
die zweite Laufrolle (30) die erste Laufrolle (28), vorzugsweise elastisch, in Richtung zu der ersten Kurvenbahn (14) vorspannt; und/oder
die zweite Laufrolle (30) elastisch in Richtung zu der zweiten Kurvenbahn (16) vorgespannt ist.

3. Vorrichtung (18) nach Anspruch 1 oder Anspruch 2, wobei:
die erste Laufrolle (28) und die zweite Laufrolle (30) axial voneinander beabstandet sind; und/oder
die zweite Laufrolle (30) exzentrisch zu der ersten Laufrolle (28) angeordnet ist.

4. Vorrichtung (18) nach einem der vorherigen Ansprüche, wobei:
die erste Laufrolle (28) um eine erste Drehachse drehbar ist;
die zweite Laufrolle (30) um eine zweite Drehachse drehbar ist; und
die erste Drehachse und die zweite Drehachse parallel beabstandet zueinander verlaufen.

5. Vorrichtung (18) nach einem der vorherigen Ansprüche, wobei:
die zweite Laufrolle (30) einen geringeren Laufrollendurchmesser aufweist als die erste Laufrolle (28).

6. Vorrichtung (18) nach einem der vorherigen Ansprüche, ferner aufweisend:
ein Spannelement (36), vorzugsweise eine Feder, zum Vorspannen der ersten Laufrolle (28) zu der ersten Kurvenbahn (14).

7. Vorrichtung (18) nach Anspruch 6, wobei:
das Spannelement (36) in einer Wirkverbindung zwischen der ersten Laufrolle (28) und der zweiten Laufrolle (30) angeordnet ist; und/oder
das Spannelement (36) die erste Laufrolle (28) und die zweite Laufrolle (30) in einander entgegengesetzte Richtungen vorspannt; und/oder
das Spannelement (36) die erste Laufrolle (28) und die zweite Laufrolle (30) elastisch gegeneinander abstützt.

8. Vorrichtung (18) nach Anspruch 6 oder Anspruch 7, wobei:
das Spannelement (36) als ein Stab, vorzugsweise Federstab, ausgeführt ist.

9. Vorrichtung (18) nach Anspruch 8, wobei mindestens eines der nachfolgenden Merkmale erfüllt ist:
der Stab ist einseitig an oder in dem Trägerkörper (20) eingespannt;
der Stab verbindet die zweite Laufrolle (30) mit dem Trägerkörper (20);
der Stab ist drehfest mit dem Trägerkörper (20) verbunden;
der Stab erstreckt sich durch die erste Laufrolle (28) hindurch;
die erste Laufrolle (28) ist im Wesentlichen koaxial zu dem Stab angeordnet;
der Stab weist eine Materialelastizität auf, mit der die zweite Laufrolle (30) die erste Laufrolle (28) elastisch in Richtung zu der ersten Kurvenbahn (14) vorspannt;
eine Drehachse der zweiten Laufrolle (30) ist parallel beabstandet zu einer Mittellängsachse des Stabs; und
eine Drehachse der ersten Laufrolle (28) ist koaxial zu einer Mittellängsachse des Stabs.

10. Vorrichtung (18') nach Anspruch 6 oder Anspruch 7, wobei:
das Spannelement (36') als eine Feder, vorzugsweise Schraubenfeder, besonders bevorzugt Schraubendruckfeder, ausgeführt ist,
wobei vorzugsweise:
die Feder senkrecht zu einer Drehachse der zweiten Laufrolle (30) angeordnet ist; und/oder
die Feder radial innen von der zweiten Laufrolle (30) angeordnet ist; und/oder
die Feder einerseits an dem Trägerkörper (20') abgestützt ist und andererseits an der zweiten Laufrolle (30) abgestützt ist.

11. Vorrichtung (18') nach einem der vorherigen Ansprüche, ferner aufweisend:
eine Gleitlagerung (44), an der die zweite Laufrolle (30) senkrecht zu einer Drehachse der zweiten Laufrolle (30) verschiebbar gelagert ist.

12. Einrichtung, vorzugsweise Behälterbehandlungseinrichtung (10), aufweisend:
eine Betätigungskurve (12), vorzugsweise eine Hubkurve, mit einer ersten, vorzugsweise oberen, Kurvenbahn (14) und einer zweiten, vorzugsweise unteren, Kurvenbahn (16), die der ersten Kurvenbahn (14) gegenüberliegt;
mindestens eine zu betätigende Komponente, vorzugsweise Hubkomponente; und
mindestens eine Vorrichtung (18) nach einem der vorherigen Ansprüche, wobei jeweils:
- die erste Laufrolle (28) an der ersten Kurvenbahn (14) geführt ist;
- die zweite Laufrolle (30) an der zweiten Kurvenbahn (16) geführt ist; und
- der Trägerkörper (20) mit einer jeweiligen zu betätigenden Komponente zum Übertragen eines Verlaufs der Betätigungskurve (12) zu der jeweiligen zu betätigenden Komponente verbunden ist.

13. Einrichtung nach Anspruch 12, wobei:
die Einrichtung eine Verschließeinrichtung, vorzugsweise ein Verschließerkarussell, ist; und/oder
die mindestens eine Komponente ein Verschließelement zum Verschließen eines Behälters mit einem Behälterverschluss ist.

14. Einrichtung nach Anspruch 12 oder Anspruch 13, wobei:
die erste Laufrolle (28) und die zweite Laufrolle (30) derart zwischen der ersten Kurvenbahn (14) und der zweiten Kurvenbahn (16) verspannt sind, dass die erste Laufrolle (28) die zweite Kurvenbahn (16) nicht berührt und/oder die zweite Laufrolle (30) die erste Kurvenbahn (14) nicht berührt; und/oder
ein Abstand der ersten Laufrolle (28) zur zweiten Kurvenbahn (16) kleiner als ein Abstand der zweiten Laufrolle (30) zur ersten Kurvenbahn (14) ist.

15. Einrichtung nach einem der Ansprüche 12 bis 14, wobei:
eine Betätigungskraft zum Betätigen der mindestens einen zu betätigenden Komponente im Wesentlichen von der ersten Kurvenbahn (14) übertragen von der jeweiligen ersten Laufrolle (28) bewirkt ist; und/oder
die zweite Laufrolle (30) im Wesentlichen die erste Laufrolle (28) gegen die erste Kurvenbahn (14) vorspannt.
